(19) Europäisches Patentamt

European Patent Office

Office européen des brevets

(11) Veröffentlichungsnummer: **0 243 739 B1**

(12) **EUROPÄISCHE PATENTSCHRIFT**

(45) Veröffentlichungstag der Patentschrift: **09.12.92**

(21) Anmeldenummer: **87105114.0**

(22) Anmeldetag: **07.04.87**

(51) Int. Cl.⁵: **H04N 9/80,** H04N 9/81, H04N 9/88

(54) **Verfahren zur Aufbereitung von Fernsehsignalen.**

(30) Priorität: **24.04.86 DE 3613798**

(43) Veröffentlichungstag der Anmeldung:
**04.11.87 Patentblatt 87/45**

(45) Bekanntmachung des Hinweises auf die
Patenterteilung:
**09.12.92 Patentblatt 92/50**

(84) Benannte Vertragsstaaten:
**CH DE FR GB IT LI**

(56) Entgegenhaltungen:
**EP-A- 0 072 507**
**WO-A-84/02242**
**DE-A- 2 901 034**
**US-A- 4 063 284**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Richter, Manfred GRUNDIG EMV
Elektro-Mechanische
Versuchsanstalt Max Grundig holländ Stifttung GmbH
Kurgartenstrasse 37 D-8510 Fürth/Bay.(DE)**

## Beschreibung

Die vorliegende Erfindung betrifft ein Verfahren zur Aufbereitung von Fernsehsignalen mit den im Oberbegriff des Anspruchs 1 angegebenen Merkmalen.

Aus der DE - 31 31 853 C2 ist ein Verfahren zum Aufzeichnen und/oder Wiedergeben von breitbandigen Signalen bekannt. Bei diesem Verfahren wird das breitbandige Eingangssignal bei der Aufzeichnung einer Signalaufspaltung in eine Komponente mit größerem Bandbreitenbedarf (Luminanzkomponente) und eine Komponente mit geringerem Bandbreitenbedarf (Chrominanzkomponente) unterzogen. Ferner erfolgt eine zeitliche Unterteilung der Komponenten in Abschnitte bestimmter Länge. Die Luminanzkomponente wird zeitlich gedehnt und die Chrominanzkomponente zeitlich gestaucht. Die in der Zeltbasis geänderten Signalabschnitte werden zyklisch abwechselnd in wenigstens zwei örtlich voneinander getrennten Kanälen eines Magnetbandes derart aufgezeichnet, daß in jedem der Kanäle eine zeitliche Überlappung von Signalabschnitten vermieden wird. Bei der Wiedergabe werden die mehrkanalig aufgezeichneten Signale durch reziproke Zeitbasisänderungen in die ursprüngliche Frequenzlage rückumgesetzt und zu einem dem ursprünglichen Signal entsprechenden Signal zusammengesetzt.

Aus der DE - 33 45 142 C1 ist eine Schaltung zur Zeitkompression oder Zeitexpansion eines Videosignals bekannt. Bei dieser Schaltung werden das Leuchtdichtesignal und die Farbartsignale mit einer Einleseimpulsfolge in einen Speicher eingelesen und während einer veränderten Zeit mit einer Ausleseimpulsfolge mit gegenüber der Einleseimpulsfolge veränderter Frequenz aus dem Speicher ausgelesen. Die Einleseimpulsfolge und die Ausleseimpulsfolge werden aus den Zeilensynchronimpulsen des Videosignals abgeleitet. Durch geeignete Wahl der Zeitkonstanten von Einlese- bzw. Ausleseimpulsfolge wird ein Zeitfehlerausgleich ermöglicht. Durch die Verwendung zusätzlicher Speicher kann ein größerer Spielraum für den Zeitfehlerausgleich geschaffen werden.

Aus der DE - 29 01 034 C3 ist ein Verfahren zur Komprimierung und Dekomprimierung von Analogsignalen in digitaler Form bekannt. Bei diesem Verfahren werden analoge Audiosignale digitalisiert, komprimiert und in die freien Informationslücken von Videosignalen eingeschoben oder anstelle von Fernsehsignalen übertragen bzw. aufgezeichnet. Zur Komprimierung werden die digitalen Signale mit einem bestimmten Takt in einen Speicher eingeschrieben und mit einem schnelleren Takt wieder ausgelesen. Durch den Aufbau des Speichers aus einzelnen Speicherzeilen und die gewählte Speichersteuerung wird erreicht, daß am Ende einer festgelegten Periode ein bestimmter zusätzlicher zeitlicher Abstand zwischen dem Ende des Auslesevorganges und dem Ende des Einschreibvorganges entsteht.

Keiner der oben angegebenen Verfahren eignet sich zur Aufzeichnung von Fernsehsignalen, bei denen die aufeinanderfolgenden Informationsabschnitte lückenfrei übertragen werden, insbesondere von Satelliten-Fernsehsignalen. Bei solchen Fernsehsignalen werden die drei Grundsignale innerhalb einer Zeile nacheinander übertragen. Das erste Grundsignal enthält Daten-, Ton- und Synchronsignale in duobinärer Codierung. Dabei wird der Ton im Paketverfahren übertragen, wobei die Informationen mehrerer Zeilen zu einer Toninformation zusammengefaßt werden, welche innerhalb eines Vollbildes lückenfrei übertragen wird. Die im ersten Grundsignal enthaltenen Synchronsignale stehen im Gegensatz zu herkömmlichen Fernsehsignal-Übertragungsverfahren nicht ohne weiteres zur Verfügung. Das zweite Grundsignal enthält die Luminanz- bzw. Helligkeitsinformation und das dritte Grundsignal die Chrominanz- bzw. Farbartinformation. Die Farbartinformation besteht aus zwei Komponenten U und V, welche Zeile für Zeile abwechselnd übertragen werden.

Der vorliegenden Erfindung liegt die Aufgabe zugrunde, ein Verfahren zur Aufbereitung von Fernsehsignalen anzugeben, bei denen die aufeinanderfolgenden Informationsabschnitte ohne zeitliche Lücken übertragen werden.

Die Lösung dieser Aufgabe erfolgt durch die im Patentanspruch 1 angegebenen Merkmale. Vorteilhafte Ausgestaltungen ergeben sich aus den Ansprüchen 2 - 9.

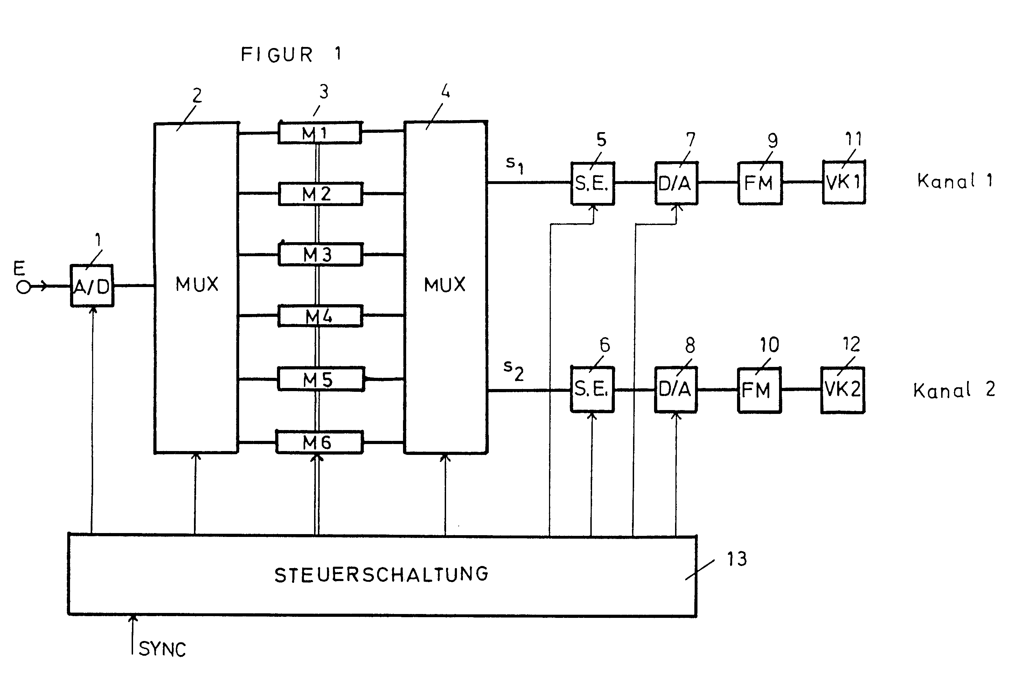

Die Vorteile der Erfindung liegen insbesondere darin, daß durch die spezielle Speichersteuerung des Speichers eine Aufzeichnung bzw. Wiedergabe von Fernsehsignalen, bei denen die aufeinanderfolgenden Informationsabschnitte lückenfrei übertragen werden, ermöglicht wird. Vorteilhafte Ausgestaltungen bestehen insbesondere darin, daß nicht nur ein Zeitfehlerausgleich erfolgen kann, sondern auch eine Dropoutkompensation. Insbesondere kann bei Mehrkanalaufzeichnung durch die gewählte Zuteilung der zeitexpandierten Signale auf die einzelnen Kanäle sowie die zeitliche Steuerung der Auslesevorgänge erreicht werden, daß selbst beim Totalausfall eines Videokopfes eine Dropoutkompensation erfolgen kann, bei der der Inhalt des (grundsätzlich bekannten) Dropoutspeichers ständig aktualisiert wird. So erhält man selbst beim Totalausfall eines Videokopfes ein vergleichsweise gutes Bild, welches lediglich eine verringerte Vertikalauflösung hat. Weitere vorteilhafte Eigenschaften ergeben sich aus Ausführungsbeispielen, welche im folgenden anhand der Figuren 1 bis 6 näher erläutert werden.

Es zeigen

Figur 1    ein Ausführungsbeispiel für eine Anordnung zur Erläuterung des prinzipiellen Vorgehens bei der Aufzeichnung,

Figur 2    ein Ausführungsbeispiel zur Erläuterung der Aufteilung aufeinanderfolgender Zeilen des breitbandigen Eingangssignals auf die Speichereinheiten, der Einschreib- und Auslesevorgänge in bzw. aus den Speichereinheiten, sowie der Aufteilung der Ausgangssignale der Speichereinheiten auf die Aufzeichnungskanäle,

Figur 3    eine Skizze zur Erläuterung des Prinzips der beanspruchten Lückenerzeugung,

Figur 4    ein Ausführungsbeispiel für eine Anordnung zur Erläuterung des prinzipiellen Vorgehens bei der Wiedergabe,

Figur 5    ein Ausführungsbeispiel zur Erläuterung der Aufteilung der wiedergegebenen Signale auf die Speichereinheiten, der Einschreib- und Auslesevorgänge in bzw. aus den Speichereinheiten sowie der Zusammenfassung der Ausgangssignale der Speichereinheiten zu einem kontinuierlichen Signal, und

Figur 6    ein Ausführungsbeispiel zur Erläuterung der Dropoutkompensation.

Die Figur 1 zeigt ein Ausführungsbeispiel für eine Anordnung zur Erläuterung des prinzipiellen Vorgehens bei der Aufzeichnung.

Dem Eingang (E) wird ein breitbandiges Satelliten-Fernsehsignal zugeführt. Dieses Signal wird in einem Analog-Digital-Wandler (1) digitalisiert. Die zur Digitalisierung notwendige Taktfrequenz, die beispielsweise 20,25 MHz beträgt, wird von einer Steuerschaltung (13) geliefert, welcher Synchronimpulse zugeführt werden, die entweder aus dem Eingangssignal abgeleitet oder extern zur Verfügung gestellt werden. Das Ausgangssignal des Analog-Digital-Wandlers (1) wird einem Multiplexer (2) zugeführt, der die aufeinanderfolgenden Zeilen des digitalisierten breitbandigen Signals auf Speichereinheiten (M1, M2, ..., M6) eines Speichers (3) aufteilt. In den Speichereinheiten werden die Signale zeitexpandiert. Jede der Speichereinheiten (M1, M2, ..., M6) kann den Inhalt einer Zeile des digitalisierten breitbandigen Signals abspeichern.

Wie die Realisierung des Speichers (3) in der Praxis erfolgt, bleibt dem Fachmann überlassen. So ist es beispielsweise möglich, den Speicher (3) in Form eines RAM's zu realisieren, wodurch die Anzahl der Leitungen gering gehalten werden könnte. Ebenso kann der Speicher (3) aber auch in Form von Schieberegistern aufgebaut sein.

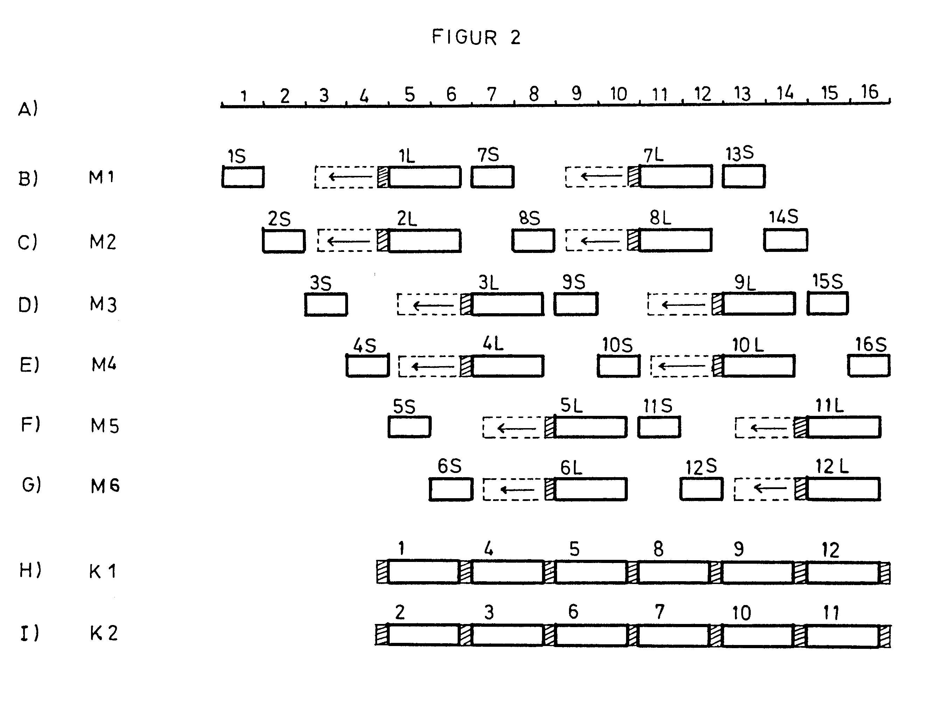

Die Steuerung des Multiplexers (2) erfolgt ebenso wie die Steuerung der Speichereinheiten (M1, M2, ..., M6) durch die Steuerschaltung (13). Unter der Steuerung der Speichereinheiten (M1, M2, ..., M6) versteht man die Wahl von Einlesetakt, Auslesetakt, Einschreibzeitintervallen und Auslesezeitintervallen. Diese Steuerung der Speichereinheiten (M1, M2, ... M6) gehört zu den Houptmerkmalen der vorliegenden Erfindung und wird unten im Zusammenhang mit Figur 2 näher erläutert. Die aus den Speichereinheiten (M1, M2, ..., M6) ausgelesenen Signale werden mittels eines zweiten Multiplexers (4), welcher ebenfalls von der Steuerschaltung (13) gesteuert wird, auf zwei Kanäle 1 und 2 aufgeteilt.

Die beiden Aufzeichnungskanäle von Fig. 1 sind identisch aufgebaut. Jeder Kanal enthält eine Stufe (5 bzw. 6) zur Synchronimpulseintastung, einen Digital-Analog-Wandler (7 bzw. 8), einen Frequenzmodulator (9 bzw. 10) und einen Videokopf (11 bzw. 12) zur Aufzeichnung des Signals auf parallele Schrägspuren eines Magnetbandes. Die Stufen (5 und 6) zur Synchronimpulseintastung und die Digital-Analog-Wandler (7 und 8) werden ebenfalls von der Steuerschaltung (13) angesteuert. Die Taktfrequenz für die Digital-Analog-Wandler (7 und 8) beträgt beispielsweise 10,25 MHz.

Im folgenden wird anhand von Figur 2 erläutert, wie die Aufteilung aufeinanderfolgender Zeilen des breitbandigen Eingangssignals auf die Speichereinheiten (M1, M2, ..., M 6), die Einschreib- und Auslesevorgänge in bzw. aus den Speichereinheiten und die Aufteilung der Ausgangssignale der Speichereinheiten auf die Aufzeichnungskanäle vorgenommen werden. Figur 2 A) zeigt die aufeinanderfolgenden Zeilen 1 bis 16 des breitbandigen Eingangssignals. Diese werden zyklisch den Speichereinheiten (M1, M2, ..., M6) derart zugeführt, daß in die erste Speichereinheit (M1) die 1., 7., 13., ... Zeile des Eingangssignals, in die zweite Speichereinheit (M2) die 2., 8., 14., ... Zeile des Eingangssignals, in die dritte Speichereinheit (M3) die 3., 9., 15., ... Zeile des Eingangssignals eingelesen wird, usw., Diese Einschreibvorgänge sind in den Figuren 2 B) bis G) mit 1S, 2S, 3S, ..., 16S bezeichnet. Die Dauer einer Zeile beträgt 64 $\mu$sec, der Einschreibtakt beträgt 20,25 MHz. Die Auslesevorgänge aus den Speichereinheiten sind mit 1L, 2L, 3L, ..., bezeichnet. Der Auslesetakt beträgt etwas mehr als die Hälfte des Einschreibtaktes, beispielsweise 10,25 MHz. Die Dauer einer aus dem Speicher ausgelesenen Zeile beträgt beispielsweise 126,44 $\mu$sec, ist also etwas weniger als doppelt so groß wie die Dauer einer Zeile des breitbandigen Eingangssignals.

Theoretisch könnte bei einer Aufteilung des breitbandigen Signals auf zwei Aufzeichnungskanäle die Dauer jeder Zeile auf 128 $\mu$s verdoppelt und damit die notwendige Aufzeichnungsbandbreite halbiert werden.

Im Vergleich zu dieser maximal möglichen Zeitexpansion wird gemäß dem obigen Ausführungsbeispiel pro aus dem Speicher ausgelesene Zeile eine Zeitspanne von 1,56 $\mu$s gewonnen. Sämtliche innerhalb eines Zeitrahmens von 20 ms gewonnenen Zeitspannen werden zur Erzeugung von zwei Arten von zeitlichen Lücken verwendet. Die ersten zeitlichen Lücken sind zeilenfrequent, treten zwischen den Auslesevorgängen zweier aufeinanderfolgenden Zeilen auf und betragen beispielsweise 1 $\mu$s. Diese zeilenfrequenten Lücken sind in der Figur 2 schraffiert gekennzeichnet. Die zweiten zeitlichen Lücken treten am Ende jedes Zeitrahmens von 20 ms auf. Wie später noch erläutert wird, werden in die ersten zeitlichen Lücken Synchronsignale eingesetzt. Während der zweiten zeitlichen Lücken findet die Kopfumschaltung statt.

Da der Auslesetakt größer gewählt wurde als der halbe Einschreibtakt, wird die Zeitdifferenz zwischen dem Ende des Einlesevorganges einer Zeile und dem Beginn des zugehörigen Auslesevorganges mit steigender Zeilenzahl geringer. Dies ist in Figur 2 durch die gestrichelten Kästchen bzw. die nach links gerichteten Pfeile gekennzeichnet.

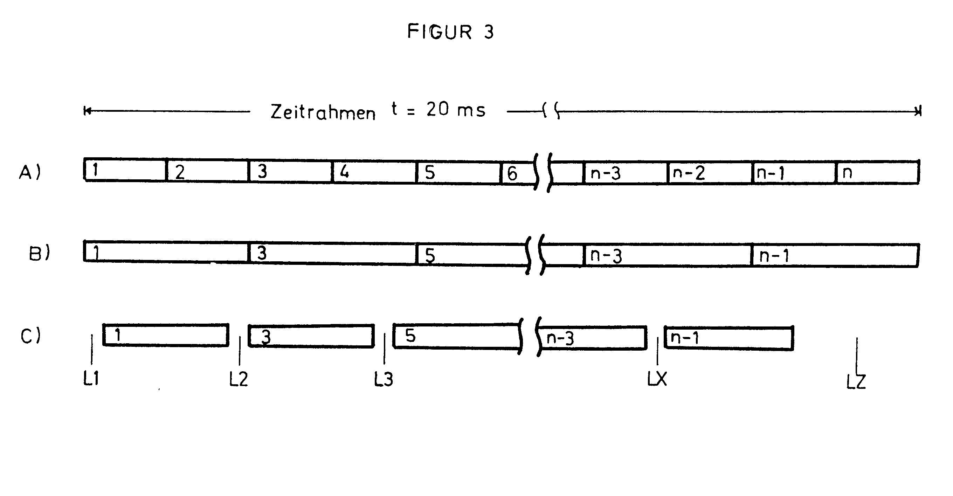

Die Figur 3 zeigt eine Skizze zur Erläuterung des Prinzips der im Zusammenhang mit Figur 2 genannten Lückenerzeugung. Die Figur 3a zeigt die einzelnen Zeilen des breitbandigen Eingangssignals in einem Kanal in einem Zeitrahmen von 20 msec, welcher der Dauer eines Halbbildes entspricht. Die Figur 3b zeigt einzelne, aus dem Speicher ausgelesene Zeilen des Eingangssignales bei einer Zeitdehnung um den Faktor 2. Die Figur 3c zeigt dieselben Zeilen des Eingangssignals wie Figur 3b, wobei allerdings der Faktor der Zeitdehnung kleiner ist als 2 und wobei die Steuerung der Auslesevorgänge aus dem Speicher derart erfolgt, daß zwischen den Auslesevorgängen erste zeitliche Lücken (L1, L2, und LX), welche zeilenfrequent auftreten und beispielsweise 1 $\mu$s betragen, sowie eine zweite zeitliche Lücke (LZ), welche am Ende eines Zeitrahmens von 20 ms auftritt, erzeugt werden. Während der genannten zeitlichen Lücken wird der Auslesevorgang aus dem Speicher unterbrochen.

Aus den Figuren 2h und 2i geht hervor, wie die Steuerung der Auslesezeitintervalle und die Aufteilung der einzelnen zeitexpandierten Zeilen auf die beiden in Figur 1 gezeigten Aufzeichnungskanäle erfolgt. Insbesondere ist gezeigt, daß die Auslesevorgänge aus den Speichern stets gleichzeitig beginnen und folglich auch gleichzeitig enden. Beispielsweise erfolgt das Auslesen der Zeile 1 aus dem Speicher (M1) zeitgleich mit dem Auslesen der Zeile 2 aus dem Speicher (M2) und das Auslesen der Zeile 3 aus dem Speicher (M3) zeitgleich mit dem Auslesen der Zeile 4 aus dem Speicher (M4), usw..

Bei D2-MAC-Satelliten-Fernsehsignalen wird in aufeinanderfolgenden Zeilen abwechselnd die U- und die V-Komponente des Farbartsignals übertragen, d. h. die U-Komponente wird beispielsweise in den Zeilen 1, 3, 5, 7, 9, ..., und die V-Komponente in den Zeilen 2, 4, 6, 8, 10, ..., gesendet. Die Aufteilung der einzelnen zeitexpandierten Zeilen auf die beiden Aufzeichnungskanäle erfolgt so, daß jedem Aufzeichnungskanal abwechselnd eine Zeile mit der U- und eine Zeile mit der V-Komponente des Farbartsignals zugeordnet wird. Diese Aufteilung ist nur bei der oben beschriebenen zeitlichen Steuerung der Auslesevorgänge aus den Speichereinheiten möglich.

Das in Figur 2h gezeigte Signal wird dem Aufzeichnungskanal 1 und das in Figur 2i gezeigte Signal dem Aufzeichnungskanal 2 der in Figur 1 gezeigten Anordnung zugeführt.

In die zeilenfrequenten Lücken jedes dieser Signale werden in einer Stufe (5 bzw. 6) zur Synchronsignaleintastung Synchronsignale eingetastet. Das erhaltene Signal wird in einem Digital-Analog-Wandler (7 bzw. 8) analogisiert, frequenzmoduliert (Stufe 9 bzw. 10) und von Videoköpfen (11 bzw. 12) in Schrägspuren eines Magnetbandes aufgezeichnet. Die Aufzeichnung erfolgt derart, daß die zwischen die Bildanteile eingetasteten Synchronsignale benachbarter Spuren örtlich nebeneinander liegen, so daß bei der Wiedergabe kein Synchronsignalübersprechen von Spur zu Spur stattfindet.

Der Aufzeichnungsvorgang wurde in dem obigen Ausführongsbeispiel zwar für D2-MAC-Satelliten-Fernsehsignale beschrieben. Es können aber ebenso andere, ähnlich aufgebaute breitbandige Signale aufgezeichnet werden. Beispielsweise ist auch eine rein digitale oder eine rein analoge Signalverarbeitung und -aufzeichnung möglich, bei welchen keine A/D- bzw. D/A-Wandler notwendig wären. Ferner können mit dem beschriebenen Aufzeichnungsverfahren grundsätzlich auch HDTV-Signale aufgezeichnet werden. Hierbei müßte die Aufteilung aufeinanderfolgender Zeilen derart erfolgen, daß immer zwei aufeinanderfolgende Zeilen des Eingangssignals einer Speichereinheit des Speichers (3) zugeführt werden. Ferner ist auch die Aufteilung des Signals auf mehr als zwei Aufzeichnungskanäle möglich.

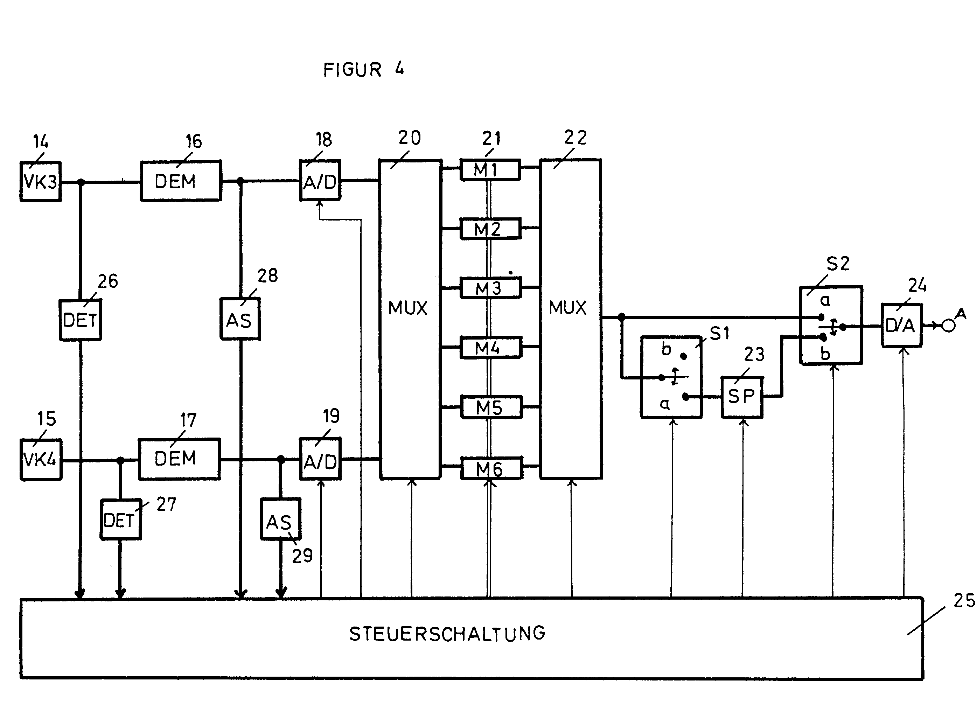

Im folgenden wird anhand der Figuren 4 bis 6 die Wiedergabe eines nach dem beanspruchten Aufzeichnungsverfahren aufgezeichneten breitbandigen Signals beispielhaft erläutert.

Die Figur 4 zeigt eine Anordnung zur Erläuterung des prinzipiellen Vorgehens bei der Wiedergabe. Das von den Videoköpfen (14 bzw. 15) wiedergegebene Signal wird in einem Frequenzdemodulator (16 bzw. 17) demoduliert. Das demodulierte Signal gelangt an einen Analog-Digital-Wandler (18 bzw. 19) und wird dort digitalisiert. Das digitalisierte Signal wird mittels eines Multiplexers (20) auf die Speichereinheiten (M1, M2, ..., M6) eines Speichers (21) verteilt. Die Speichereinheiten (M1, M2, ..., M 6) dienen zur Zeitkompression des wiedergegebenen Signals. Die aus den Speichereinheiten ausgelesenen Signal werden mittels eines Multiplexers (22) zu einem kontinuierlichen breitbandigen Signal zusammengefaßt. Das kontinuierliche breitbandige Signal gelangt, wenn kein Dropout vorliegt, einerseits über einen Schalter (S2), welcher sich in der Schaltstellung a befindet, an einen Digital-Analog-Wandler (24) und wird andererseits über einen Schalter (S1), welcher sich ebenfalls in der Schaltstellung a befindet, in einem Dropoutspeicher (23), welcher eine Speicherkapazität von zwei Zeilen hat, abgespeichert. Im Falle eines Dropouts befinden sich die beiden Schalter (S1 und S2) in den Schaltstellungen b, so daß der Ausgang des Multiplexers (22) von den nachfolgenden Schaltungsteilen abgetrennt ist und die im Speicher (23) abgespeicherten Signale über den Schalter (S2) an den D/A-Wandler (24) weitergegeben werden. Das analoge Ausgangssignal des D/A-Wandlers (24) gelangt an den Ausgangsanschluß (A) der Anordnung. Ferner ist bei der Wiedergabe eine Steuerschaltung (25) vorgesehen, welche den Betrieb der Digital-Analog-Wandler (18 und 19), des Multiplexers (20), der Speichereinheit (21), des Multiplexers (22), des Dropoutspeichers (23), der Schalter (S 1 und S 2) und des Digital-Analog-Wandlers (24) steuert. An die Steuerschaltung (25) angelegt sind die Ausgangssignale von Dropout-Detektoren (26 bzw. 27), welche das Ausgangssignal des Videokopfes (14 bzw. 15) auf Dropouts hin überwachen, und die Ausgangssignale von Amplitudensieben (28 bzw. 29), welche zur Abtrennung der Synchronsignale aus dem wiedergegebenen, frequenzdemodulierten Signal des jeweiligen Kanals dienen.

Durch Auswertung der bei der Aufzeichnung in die zeilenfrequenten Lücken eingefügten Synchronimpulse kann somit in einfacher Weise durch eine geeignete Speichersteuerung ein Zeitfehlerausgleich durchgeführt werden.

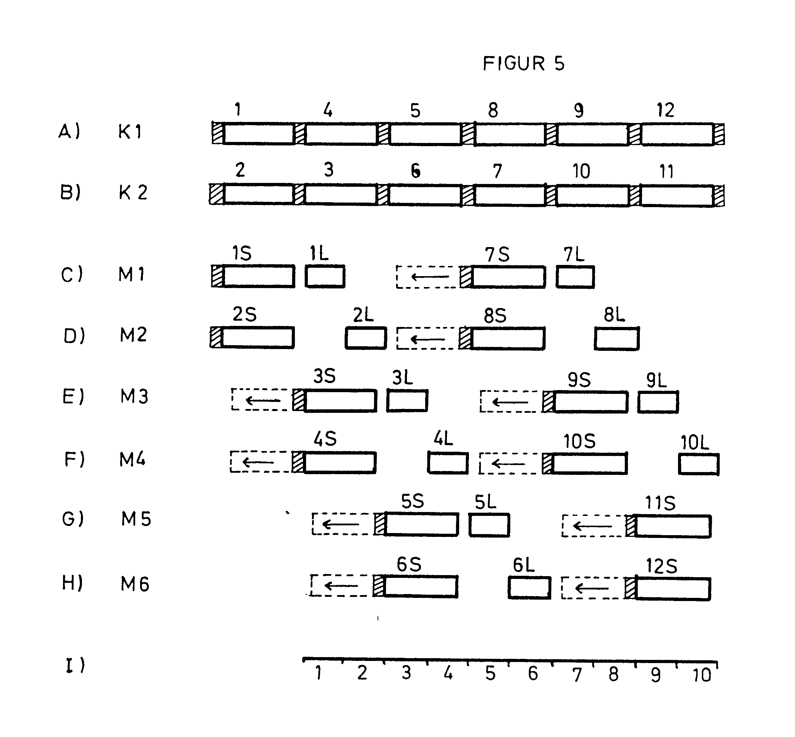

Die Figur 5 zeigt ein Ausführungsbeispiel zur Erläuterung der Aufteilung der wiedergegebenen Signale auf die Speichereinheiten (M1, M2, ..., M6), der Einschreib- und Auslesevorgänge in bzw. aus den Speichereinheiten sowie der Zusammenfassung der Ausgangssignale der Speichereinheiten zu einem kontinuierlichen Signal.

Die Figuren 5a und 5b zeigen die wiedergegebenen Signale in den Kanälen (K1 bzw. K2). Die schraffierten Flächen stellen wiederum die zeilenfrequenten Lücken dar, in welche bei der Aufzeichnung Synchronimpulse eingesetzt wurden. Die Einschreibvorgänge in die Speichereinheiten (M1, M2, ..., M6) sind in den Figuren 5c bis 5h mit 1S, 2S, ..., 12S bezeichnet. Da die in die Speichereinheiten (M1, M2, ..., M6)ein-zuschreibenden Signale zeitfehlerbehaftet sind, muß der Steuerschaltung eine den Zeitfehler beschreibende Information zugeführt werden. Dies geschieht durch Abtrennung der bei der Aufzeichnung in das aufzuzeichnende Signal eingefügten Synchronsignale aus dem wiedergegebenen Signal jedes Kanals. Diese zeitfehlerbehafteten Synchronsignale werden der Steuerschaltung zugeführt und von dieser in grundsätzlich bekannter Weise zur Zeitfehlerkorrektur verwendet.

Die Auslesevorgänge aus den Speichereinheiten (M1, M2, ..., M6), die mit 1L, 2L, ..., 10L gekennzeichnet sind, erfolgen derart, daß am Ausgang des Multiplexers (22) ein kontinuierliches digitales breitbandiges Signal entsteht, welches in Figur 5i angegeben ist und mit dem am Eingang (E) von Figur 1 anliegenden Signal übereinstimmt.

Die Wahl der Einlese- und Auslesetakte sowie der Zeitintervalle von Einlese- und Auslesevorgängen muß derart erfolgen, daß die bei der aufzeichnungsseitigen Signalaufbereitung eingefügten zeilenfrequenten und halbbildfrequenten Lücken wieder geschlossen werden. Folglich wird bei der Wiedergabe die Zeitdifferenz zwischen dem Ende des Einschreibvorganges einer Zeile und dem Beginn des zugehörigen Auslesevorganges mit steigender Zeilenzahl größer. Dies ist in der Figur 5 durch die gestrichelten Kästchen bzw. die nach links gerichteten Pfeile gekennzeichnet.

Für den Ausgleich des Zeitfehlers steht bei dem in Figur 5 gezeigten Ausführungsbeispiel ein Zeitintervall von ± 1/4 Zeile zur Verfügung (siehe z. B. Abstand zwischen dem Ende des Einschreibvorganges der 7. Zeile und dem Anfang des Auslesevorganges der 7. Zeile). Dieses Zeitintervall kann im Bedarfsfall durch die Verwendung zusätzlicher Speichereinheiten vergrößert werden.

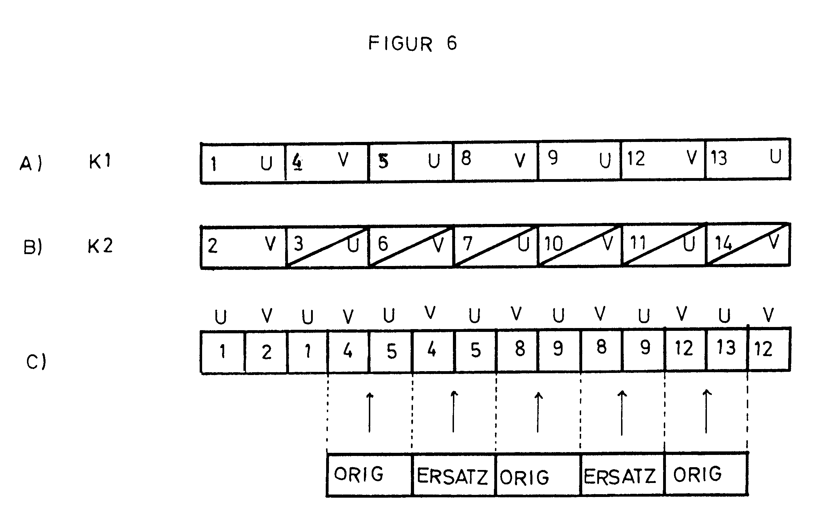

Im folgenden wird anhand des in Figur 6 gezeigten Ausführungsbeispiels erläutert, wie bei einem nach der vorliegenden Erfindung aufgezeichneten Signal eine Dropout-Kompensation erfolgen kann. Die in den Figuren 6a und 6b dargestellten Signale entsprechen im wesentlichen den in den Figuren 5a und 5b gezeigten Signalen, abgesehen davon, daß die zum Verständnis der Dropout-Kompensation nicht notwendigen zeilenfrequenten Lücken weggelassen wurden. So ist im Wiedergabekanal 1 die 1., 4., 5., 8., 9., 12. und 13. Zeile des ursprünglichen Signals und im Wiedergabekanal 2 die 2., 3., 6., 7., 10., 11. und 12. Zeile des ursprünglichen Kanals (in zeitgedehnter Form) enthalten. Durch die bei der Aufzeichnung vorgenommene Verteilung der einzelnen Zeilen auf die beiden Kanäle wurde erreicht, daß sich in jedem Kanal Zeilen mit der U- und Zeilen mit der V-Komponente des Farbartsignals abwechseln. Dies ist bei der Dropout-Kompensation von Vorteil, wie im folgenden gezeigt wird:

Es sei angenommen, daß durch eine Störung beliebiger Art die in der 3., 6., 7. 10., 11. und 14. Zeile enthaltene Information des im Kanal 2 wiedergegebenen Signals zerstört wurde. Aus der Fig. 6c geht hervor, wie sich in diesem Fall das Ausgangssignal der Gesamtschaltung zusammensetzt. Die 1. und die 2. Zeile des wiedergegebenen Signals ist nicht gestört und wird demzufolge "ordnungsgemäß" vom Ausgang des Multiplexers (22) auf direktem Weg dem D/A-Wandler (24) zugeführt. Ferner wird sowohl die 1. Zeile, die eine U-Komponente des Farbartsignals enthält, als auch die 2. Zeile, die eine V-Komponente des Farbartsignals enthält, im Dropout-Speicher (23) abgespeichert. Da die nächste wiederzugebende Zeile, d. h. die 3. Zeile, gestört ist, wird im nächsten Schritt aus dem Dropout-Speicher (23) die Zeile mit der richtigen Farbartinformation herausgesucht, d. h. im vorliegenden Fall die 1. Zeile, und anstelle der gestörten 3. Zeile in das Signal eingesetzt. Die darauffolgende wiederzugebende Zeile, d. h. die 4. Zeile, ist ungestört vorhanden und wird deshalb einerseits direkt dem D/A-Wandler (24) zugeführt und andererseits anstelle der 2. Zeile, welche ebenfalls eine V-Komponente des Farbartsignals enthält, im Dropout-Speicher (23) abgelegt. Anschließend folgt eine Wiedergabe der ungestörten 5. Zeile und eine Abspeicherung dieser Zeile anstelle der bis dahin abgespeicherten 1. Zeile, welche ebenfalls eine U-Komponente des Farbartsignals enthält. Danach werden, da die Zeilen 6 und 7 gestört sind, die abgespeicherten Zeilen 4 und 5 wiedergegeben, usw.

Auf diese Weise wird erreicht, daß bei der Dropout-Kompensation stets eine Auffrischung des Dropout-Speichers (23) erfolgen kann. Folglich ist selbst beim Totalausfall eines Kopfes ein vergleichsweise gutes Bild wiedergebbar, welches im Vergleich zum ursprünglichen ungestörten Bild lediglich eine verringerte Auflösung in Vertikalrichtung aufweist.

Abschließend sei noch darauf hingewiesen, daß beim vorstehend beschriebenen Ausführungsbeispiel die Dropout-Kompensation hinter dem Multiplexer (22), also beim nicht mehr zeitexpandierten Signal vorgenommen wurde. Es ist aber grundsätzlich ebenso denkbar, die Dropout-Kompensation an einer anderen Stelle durchzuführen.

**Patentansprüche**

1. Verfahren zur Aufbereitung von Fernsehsignalen, bei denen die aufeinanderfolgenden Informationsabschnitte ohne zeitliche Lücken übertragen werden,
**dadurch gekennzeichnet, daß**
   - je n aufeinanderfolgende Zeilen des Fernsehsignals oder je 2n paarweise aufeinanderfolgende Zeilen des Fernsehsignals zyklisch n Speichereinheiten eines Speichers zur Zeitexpansion zugeführt werden,
   - das zeitexpandierte Signal auf k Kanäle verteilt wird,
   - das zeitexpandierte Signal jeden Kanals zwei Arten von zeitlichen Lücken aufweist, deren erste zeilenfrequent und deren zweite halbbildfrequent auftreten,
   - in die zeilenfrequenten Lücken Synchronimpulse eingesetzt werden, und
   - die zeitexpandierten, mit Synchronimpulsen versehenen Signale nach dem Schrägspurverfahren auf k parallele Spuren eines Magnetbandes aufgezeichnet werden, wobei während der halbbildfrequenten Lücken die Kopfumschaltung stattfindet.

2. Verfahren nach Anspruch 1,
**dadurch gekennzeichnet, daß**
das Fernsehsignal ein Satelliten-Fernsehsignal ist.

3. Verfahren nach Anspruch 2,
**dadurch gekennzeichnet, daß**
die Zuteilung des zeitexpandierten Signals auf die k Kanäle derart erfolgt, daß jeder Kanal sowohl U- als auch V-Komponenten des Farbartsignals des Satelliten-Fernsehsignals enthält.

4. Verfahren nach Anspruch 3,
**dadurch gekennzeichnet, daß**
die den einzelnen Kanälen zugeordneten Auslesevorgänge gleichzeitig beginnen und enden.

5. Verfahren nach einem der vorhergehenden Ansprüche,
**dadurch gekennzeichnet, daß**
die in benachbarten Spuren aufgezeichneten Synchronimpulse auf dem Magnetband örtlich nebeneinander liegen.

6. Verfahren zur wiedergabeseitigen Aufbereitung von Fernsehsignalen, die nach einem oder mehreren der Ansprüche 1 bis 5 aufgezeichnet wurden,
**dadurch gekennzeichnet, daß**
die Synchronimpulse aus dem wiedergegebenen Signal abgetrennt und zur Steuerung des Zeitfehlerausgleiches verwendet werden.

7. Verfahren zur wiedergabeseitigen Aufbereitung von Fernsehsignalen, die nach einem oder mehreren der Ansprüche 1 bis 6 verarbeitet wurden,
**dadurch gekennzeichnet,** daß
die wiedergegebenen Fernsehsignale in einen Speicher eingeschrieben werden, dessen Steuerung derart erfolgt, daß die bei der aufzeichnungsseitigen Aufbereitung erzeugten zeilenfrequenten und halbbildfrequenten Lücken geschlossen werden und der Zeitfehlerausgleich durchgeführt wird.

8. Verfahren nach Anspruch 7,
**dadurch gekennzeichnet,** daß
die Fernsehsignale auf n Speichereinheiten des Speichers zur Zeitkompression verteilt und die zeitkomprimierten Signale zu einem kontinuierlichen Signal zusammengefaßt werden.

9. Verfahren nach einem oder mehreren der Ansrüche 6 bis 8,
**dadurch gekennzeichnet,** daß
der Inhalt zweier Zeilen des kontinuierlichen Signals abgespeichert, daß beim Vorliegen eines Dropouts anstelle gestörter Signalabschnitte abgespeicherte Signalabschnitte in das Signal eingesetzt und daß bei dropout-freiem Signal die abgespeicherten Werte aktualisiert werden.

## Claims

1. Method for conditioning television signals in which the successive information sections are transmitted without time gaps,
characterised in that
   - each n successive lines of the television signal or each 2n paired successive lines of the television signal are cyclically supplied n storage units of a memory for the purpose of time expansion,
   - the time-expanded signal is distributed to k channels,
   - the time-expanded signal of each channel exhibits two types of time gaps, the first ones of which occur with line frequency and the second ones of which occur with field frequency,
   - synchronisation pulses are inserted into the line-frequency gaps, and
   - the time-expanded signals provided with synchronisation pulses are recorded in accordance with the helical scan method on k parallel tracks of a magnetic tape, the heads being switched during the field-frequency gaps.

2. Method according to Claim 1, characterised in that the television signal is a satellite television signal.

3. Method according to Claim 2, characterised in that the time-expanded signal is allocated to the k channels in such a manner that each channel contains both U and V components of the chrominance signal of the satellite television signal.

4. Method according to Claim 3, characterised in that the read-out processes allocated to the individual channels begin and end at the same time.

5. Method according to one of the preceding claims, characterised in that the synchronisation pulses recorded on adjacent tracks are located locally adjacently on the magnetic tape.

6. Method for the replay-end conditioning of television signals which have been recorded in accordance with one or more of Claims 1 to 5, characterised in that the synchronisation pulses are separated from the replayed signal and are used for controlling the timing error compensation.

7. Method for the replay-end conditioning of television signals which have been processed in accordance with one or more of Claims 1 to 6, characterised in that the replayed television signals are entered into a memory, which is controlled in such a manner that the line-frequency and field-frequency gaps generated during the recording-end conditioning are closed and the timing error compensation is carried out.

8. Method according to Claim 7, characterised in that the television signals are distributed to n storage units of the memory for time compression and the time-compressed signals are combined to form a continuous signal.

9. Method according to one or more of Claims 6 to 8, characterised in that the content of the two lines of the continuous signal is stored, that if a dropout is present, stored signal sections are inserted into the signal instead of disturbed signal sections, and in that the stored values are updated when the signal is free of dropouts.

**Revendications**

1. Procédé de préparation de signaux de télévision, dans lesquels les sections d'informations successives sont transmises sans extinctions temporelles, caractérisé en ce que :
   - on envoie, de manière cyclique, à chaque fois n lignes successives du signal de télévision ou à chaque fois 2n lignes successives du signal de télévision en paires à n unités de mémoire d'une mémoire en vue d'une expansion temporelle,
   - le signal ayant subi l'expansion temporelle est réparti dans k canaux,
   - le signal ayant subi l'expansion temporelle de chaque canal comporte deux sortes d'extinction temporelle dont la première se produit à la fréquence de ligne et la seconde à la fréquence de trame,
   - on introduit des impulsions de synchronisation dans les extinctions à la fréquence de ligne, et
   - on enregistre les signaux ayant subi l'expansion temporelle et munis d'impulsions de synchronisation sur k pistes parallèles d'une bande magnétique par le procédé de balayage hélicoïdal, la commutation des têtes ayant lieu pendant les expansions à la fréquence de trame.

2. Procédé selon la revendication 1, caractérisé en ce que le signal de télévision est un signal de télévision par satellite.

3. Procédé selon la revendication 2, caractérisé en ce que la division du signal ayant subi l'expansion temporelle dans les k canaux s'effectue de telle manière que chaque canal contient aussi bien des composantes U que des composantes V du signal de chromaticité du signal de télévision par satellite.

4. Procédé selon la revendication 3, caractérisé en ce que les processus de lecture associés aux canaux individuels commencent et finissent en même temps.

5. Procédé selon l'une des revendications précédentes, caractérisé en ce que les impulsions de synchronisation enregistrées sur des pistes voisines se trouvent localement les unes à côté des autres sur la bande magnétique.

6. Procédé pour la préparation, du côté de la reproduction, de signaux de télévision qui ont été enregistrés conformément à l'une ou plusieurs des revendications 1 à 5, caractérisé en ce que les impulsions de synchronisation sont séparées du signal reproduit et sont utilisées pour la commande de la compensation d'erreurs de temps.

7. Procédé pour la préparation, du côté de la reproduction, de signaux de télévision qui ont été traités conformément à une ou plusieurs des revendications 1 à 6, caractérisé en ce que les signaux de télévision reproduits sont inscrits dans une mémoire dont la commande s'effectue de telle manière que les extinctions à la fréquence de ligne et à la fréquence de trame qui sont produites lors de la préparation du côté de l'enregistrement sont supprimées et que l'on réalise la compensation d'erreurs de temps.

8. Procédé selon la revendication 7, caractérisé en ce qu'on répartit les signaux de télévision dans n unités de mémoire de la mémoire en vue d'une compression temporelle et en ce qu'on assemble les signaux comprimés dans le temps en un signal continu.

9. Procédé selon l'une ou plusieurs des revendications 6 à 8, caractérisé en ce qu'on mémorise le contenu de deux lignes du signal continu, en ce que, dans le cas de perte d'information (drop-out), on introduit dans le signal des sections de signal mémorisées à la place de sections de signal perturbées et en ce que, dans le cas d'un signal sans perte d'information, on actualise les valeurs mémorisées.

FIGUR 1

Kanal 1

Kanal 2

11 VK1
12 VK2
9 FM
10 FM
7 D/A
8 D/A
5 S.E.
6 S.E.
$s_1$
$s_2$
4 MUX
3 M1 M2 M3 M4 M5 M6
2 MUX
1 A/D
E
13 STEUERSCHALTUNG
SYNC

FIGUR 2

FIGUR 3

FIGUR 4

EP 0 243 739 B1

FIGUR 5

EP 0 243 739 B1

FIGUR 6

A)   K1

B)   K2

C)

ORIG | ERSATZ | ORIG | ERSATZ | ORIG

EP 0 243 739 B1